# EUROPÄISCHE PATENTSCHRIFT

(11) **EP 1 104 138 B1**
(45) Veröffentlichungstag und Bekanntmachung des Hinweises auf die Patenterteilung: **14.12.2016**
(21) Anmeldenummer: 00122052.4
(22) Anmeldetag: 11.10.2000
(51) Int. Cl.: H04L 25/03, H04L 1/00

(54) **Entwürfelung von Datenrahmen**
Descrambling of data frames
Désembrouillage de trames de données

(30) Priorität: 26.11.1999 DE 19956845
(43) Veröffentlichungstag der Anmeldung: 30.05.2001
(73) Patentinhaber: ROBERT BOSCH GMBH, 70442 Stuttgart (DE)
(72) Erfinder: Hofmann, Frank, 31137 Hildesheim (DE)

(56) Entgegenhaltungen:
- EP-A- 0 865 176
- US-A- 5 835 480

## Beschreibung

### Stand der Technik

Die Erfindung geht aus von einem Verfahren zur Decodierung von Datenströmen, die Information und Steuerungskanäle umfassen, wobei diese in Übertragungsrahmen eingebettet und ihre Bits verwürfelt sind.

Aus der US 5,835,480 ist ein Verfahren und eine entsprechende Vorrichtung bekannt zum Empfangen von Übertragungsrahmen, die drei verschiedene Arten von Informationen enthalten: Sprach-, Steuerungs- und Benutzerdaten. Die Bearbeitung dieser Informationsströme also insbesondere die Entwürfelung und Dekodierung erfolgt wesentlich parallel.

Digitale Rundfunksysteme haben oftmals einen oder mehrere Steuerungskanäle, welche Informationen enthalten, um spezielle Services beim Frequenzsuchlauf auszuwählen sowie diese Services zu decodieren. Diese Steuerungs- und Decodierungsinformation enthält somit die Multiplexgestaltung sowie Informationen über die darin enthaltenen Dienste und Programme, die hier mit Services bezeichnet werden.

In Digital Audio Broadcasting (DAB) hat dieser Steuerungskanal den Namen Fast Information Channel (FIC) und wird einmal pro Übertragungsrahmen gesendet. Weitere Information hierzu findet sich zum Beispiel in ETS 300 401 Radio broadcasting systems; Digital Audio Broadcasting (DAB) to mobile, portable and fixed receivers.

Erst wenn dieser Steuerungskanal vom Empfänger decodiert wurde, beginnt die Decodierung der einzelnen Services und anschliessend die Kanal- und Quellcodierung bis zuletzt die Wiedergabe der quellcodierten Daten erfolgen kann. Ein wichtiges Empfängermerkmal ist es, wie lange dieser Vorgang dauert. Bei DAB werden alle Vorgänge sequentiell abgearbeitet. Die Verzögerungszeiten der einzelnen Blöcke addieren sich. Auf Grund der hohen Wiederholungsrate des Steuerungskanals bleibt die Verzögerungszeit recht gering. Die Daten der Steuerungskanäle durchlaufen im allgemeinen nicht denselben Interleaver (Verwürfler) wie die Datenkanäle, um deren Verzögerungszeit gering zu halten.

### Vorteile der Erfindung

Mit den Maßnahmen gemäß Anspruch 1 oder 13 ist es möglich, zumindest durch eine teilweise parallele Bearbeitung der Informationskanäle und Steuerungskanäle die Verzögerungszeit in einem Empfänger von einer Empfangsfrequenzeinstellung bis zur Wiedergabe von Quelldaten, zum Beispiel Audiodaten, gegenüber herkömmlichen Verfahren wesentlich zu verkürzen.

In Übertragungssystemen, die sich von DAB unterscheiden, entsteht je nach Systemparametern eine für den Hörer unzumutbare große Verzögerung. Ein Beispiel hierfür ist das Übertragungssystem Digital Radio Mondiale (DRM), bei dem alleine der De-Interleaver/Entwürfler eine Verzögerung von 2 Sekunden bewirkt. Bei der Erfindung wird diese Verzögerung dadurch verkürzt, daß der Speicher des De-Interleavers mit Empfangsdaten gefüllt wird, bevor mindestens einer der Steuerungskanäle decodiert worden ist.

Die weiteren Ansprüche zeigen vorteilhafte Ausgestaltungen auf.

### Zeichnung

Anhand der Zeichnungen werden Ausführungsbeispiele der Erfindung näher beschrieben. Es zeigen
Figur 1 den sequentiellen Ablauf in einem Empfänger von der Empfangsfrequenzeinstellung bis zur Ausgabe des Audiosignals bei einem herkömmlichen digitalen Empfänger,
Figur 2 den Rahmenaufbau beim DRM-System,
Figur 3 ein Ablaufdiagramm zur Verkürzung der Verzögerungszeit bei einem digitalen Empfänger nach der Erfindung,
Figur 4 ein zu Figur 2 alternatives Ablaufdiagramm,
Figur 5 ein Blockschaltbild für einen erfindungsgemäßen Empfänger.

### Beschreibung von Ausführungsbeispielen

Vor der Erläuterung der eigentlichen Erfindung wird zuerst auf ein bisheriges Decodierverfahren von Daten in einem digitalen Empfänger eingegangen.

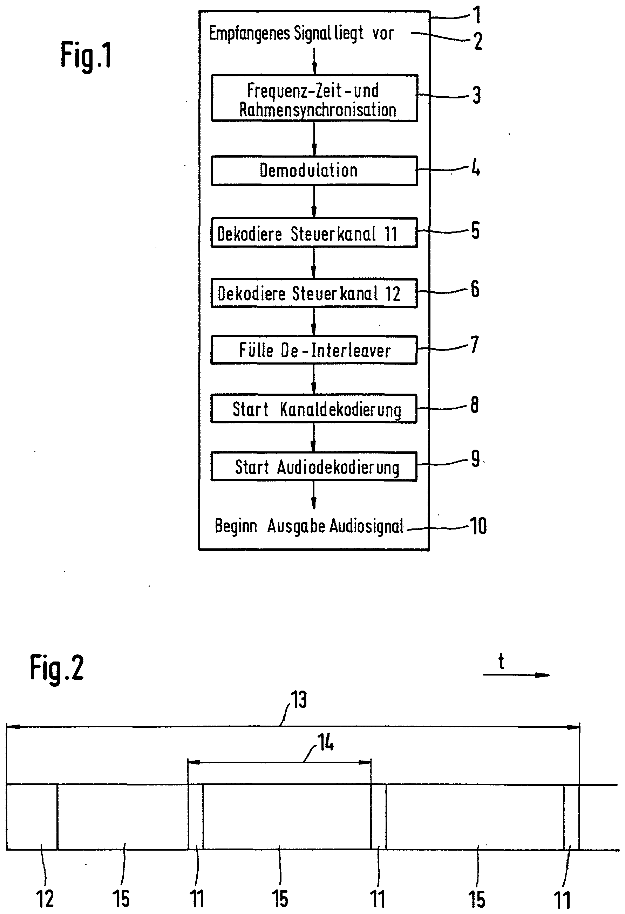

Den zeitlichen sequentiellen Ablauf im Empfänger von der Empfangsfrequenzeinstellung bis zur Ausgabe des Quellsignals/Audiosignals wird anhand von Figur 1 beschrieben. Die einzelnen Verarbeitungsschritte werden gestartet, sobald der jeweils vorherige Block Ausgangsdaten liefert. Der Empfänger 1, d.h. die Einrichtung zur Decodierung, stellt sich auf einer Empfangsfrequenz ein oder wird vom Bediener auf diese eingestellt (2). Es erfolgt eine Frequenz-, Zeit- und/oder Rahmensynchronisation (3), um das Signal decodieren zu können. Danach folgt die Demodulation (4) des empfangenen Signals. Im nächsten Schritt (5) wird der erste Steuerungskanal 11 decodiert, welcher Informationen über die empfangenen Servicearten (Services) dieser Frequenz enthält sowie über die Konfiguration des Entwürflers/De-Interleavers. Anschließend wird der zweite Steuerungskanal decodiert (6), der Informationen über die Konfigurationen des Kanal- und Quelldecoders/Audiodecoders enthält. Mit den Informationen der Steuerungskanäle 11 und 12 wird der De-Interleaver konfiguriert und anschließend sein Speicher gefüllt (7). Sobald dieser erste Ausgangsdaten produziert, kann der Kanaldecoder diese decodieren (8). Die Ausgangsdaten des Kanaldecoders werden vom Audiodecoder quelldecodiert (9). Danach beginnt die Ausgabe (10) des Quellsignals/Audiosignals. Alle einzelnen Verzögerungszeiten addieren sich bei diesem Ablaufschema.

In DRM werden zwei Steuerungskanäle verwendet. Die Wiederholrate eines ersten Steuerungskanals liegt bei mehreren hundert Millisekunden (800 ms oder 1200 ms), die Widerholrate eines zweiten Steuerungskanals bei 400 ms.

Figur 2 zeigt den Aufbau des Übertragungsrahmens beim DRM-System.

Der gesamte Übertragungsrahmen über der Zeit t ist mit dem Bezugszeichen 13 bezeichnet und ein einzelner Rahmen mit dem Bezugszeichen 14. Dieser enthält jeweils einen Informationskanal 15 mit Services und einen ersten Steuerungskanal 11. Am Anfang des gesamten Übertragungsrahmens 13 ist jeweils ein zweiter Steuerungskanal 12 untergebracht. Die Bits der Informationskanäle 15 werden verwürfelt, um burstartige Fehler zu verteilen und damit eine einfachere Fehlerkorrektur zu ermöglichen. Beispielsweise erfolgt eine Fehlerverteilung gespreizt auf zwei Übertragungsrahmen; d. h. der Speicher des De-Interleavers muß mindestens eine Datenkapazität von zwei Übertragungsrahmen aufweisen aufgrund derer anschließend die Entwürflung (zeitliche Umordnung der verwürfelten Bits in der richtigen Reihenfolge, d. h. diese vor einer Verwürflung im Sender vorlagen) vorgenommen werden kann.

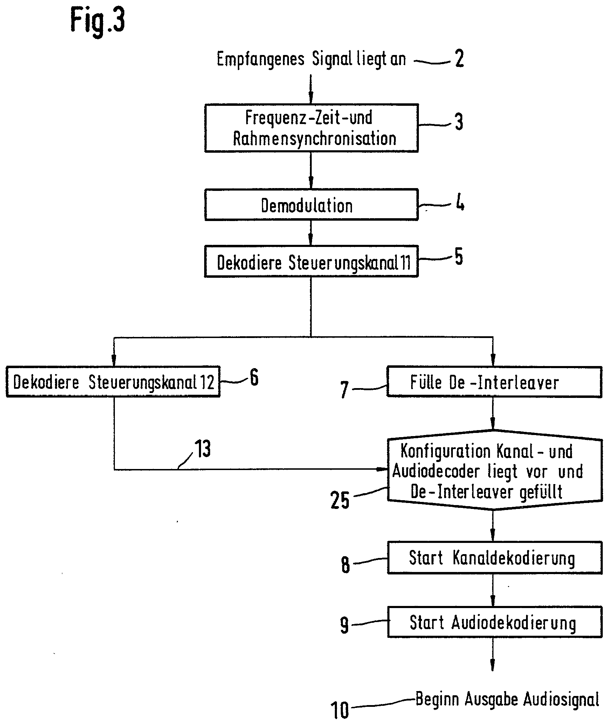

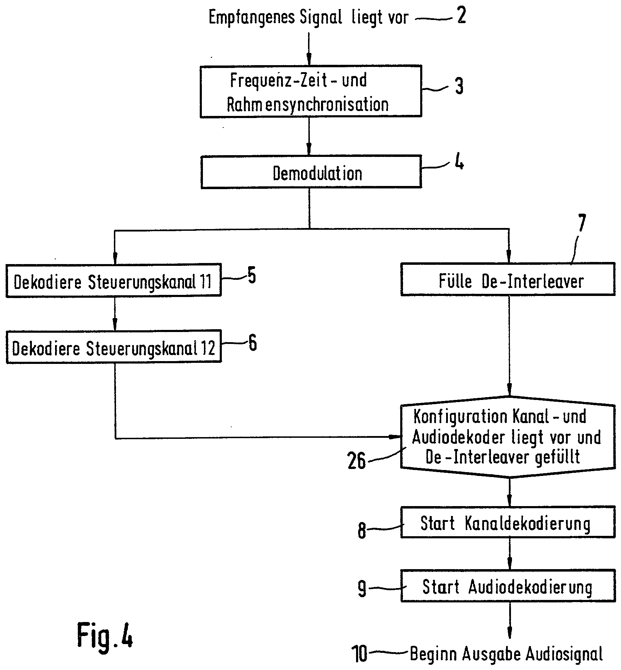

Die Figuren 3 und 4 zeigen nun eine teilweise parallele Verarbeitung im Empfänger mit zwei Steuerungskanälen. Die Bezugszeichen der einzelnen Schritte sind entsprechend zum Ablauf gemäß der Figur 1 gewähnt. In folgenden wird erst Figur 3 betrachtet. Hierbei wird angenommen, daß der Steuerungskanal 11 eine größere Wiederholrate besitzt als der Steuerungskanal 12. Nach der Synchronisation (3) wird der erste Steuerungskanal decodiert, welcher alle Informationen enthält wie der De-Inteleaver konfiguriert werden muß, sowie Informationen ob der gewünschte Service auf der Empfangsfrequenz vorliegt. Sobald diese Informationen vorhanden sind, kann der Empfänger beginnen den Speicher des De-Interleaver zu füllen (6), ohne auf die Information des Steuerungskanals 12 zu warten. Die Information des Steuerungskanals 12 enthält die Konfiguration für den Kanal- sowie Quelldecoder. Sobald dieser decodiert wurde (13) und der Speicher des De-Interleavers gefüllt ist (25) kann mit der Kanaldecodierung (8) begonnen werden, worauf die Quell/Audiodecodierung (9) folgt.

Im Falle von Figur 4 beginnt der Empfänger den Speicher des De-Interleavers zu füllen (7), ohne jegliche Information aus den beiden Steuerungskanälen empfangen zu haben. Hierzu muß der Empfänger die Konfiguration des De-Interleavers durch andere Maßnahmen feststellen. Für die Konfiguration des Kanal- und Audiodecoders werden die Informationen der beiden Steuerungskanäle verwendet. Diese liegen vor, bevor der Speicher des De-Interleavers komplett gefüllt ist (26).

Desweiteren ist dem Empfänger nicht bekannt, ob er den gewünschten Service/die Serviceart, empfängt. Stellt der Empfänger fest, daß er einen nicht gewünschten Service empfängt, verwirft er den Speicherinhalt des De-Interleavers.

Folgende Maßnahmen kann der Empfänger ergreifen, um abzuschätzen welche Entwürfelungs/De-Interleaver Konfiguration er benötigt und ob es sich um den gewünschten Service handelt, solange er diese Information noch nicht aus den Steuerungskanälen erhalten hat.

Folgende Punkte sind zur Abschätzung der De-Interleaver Konfiguration wichtig:
- anhand der Empfangsfrequenz ist eine spezielle De-Inteaver Konfiguration am wahrscheinlichsten. Zum Beispiel wird typischerweise in den Kurzwellenbändern aufgrund der Kanaleigenschaften (Fading, sonstige insbesondere atmosphärische Störungen) ein langer Interleaver verwendet in den Mittelwellenbändern ein kurzer Interleaver.
- Der Empfänger hat auf derselben Frequenz bereits empfangen und die Entwürfler/De-Interleaver Konfiguration abgespeichert, welche er nach dem erneuten Einschalten wieder verwendet.
- Der Empfänger hat den gleichen Service auf einer anderen Frequenz bereits schon einmal empfangen und erwartet dieselbe De-Interleaver Konfiguration.

Die Detektion des gewünschten Service kann in folgender Weise erfolgen:
- Der Empfänger hat auf der selben Frequenz bereits empfangen und geht davon aus, daß auf dieser Frequenz wieder derselbe Service übertragen wird.
- Der Empfänger kennt aufgrund intern vorab gespeicherter Daten, welcher Service wann und auf welcher Frequenz übertragen wird, d. h. die Verküpfung zwischen Serviceart und Frequenz- bzw. Frequenzbereich ist nicht fest voreingestellt, sondern nach einem vorgegebenen Zeitplan festgelegt.

Ein weiterer Fall welcher auftreten kann, ist daß die Kapazität des De-Interleavers kürzer ist als die Wiederholzeit der Steuerungskanäle. Dies kann insbesondere in den AM-Bändern auftreten, da hier ein kürzerer Interleaver verwendet wird. Hierbei würde der Fall entstehen, daß der Speicher des De-Interleavers gefüllt ist, bevor die Information für den Kanal- und Audiodecoder vorliegt, wie der Datenstrom zu decodieren ist. Hierzu sind folgende Lösungswege vorteilhaft. Im ersten Fall verwirft der De-Interleaver immer einen Datenteil, solange bis alle notwendigen Informationen aus den Steuerungskanälen vorhanden sind. Im zweiten Fall startet der Kanaldecoder die Decodierung. Tritt eine sehr hohe Bitfehlerrate auf, kann davon ausgegangen werden, daß die De-Interleaver Konfiguration falsch gewählt wurde und dann ein neuer Versuch notwendig ist. Die Konfiguration des Kanal- und Audiodecoders wird geschätzt, indem angenommen wird, daß diese sich nicht geändert hat, seit der Service das letzte Mal empfangen wurde.

Eine Voraussetzung für eine exakte Decodierung ist die Synchronisation des De-Interleavers auf dem empfangenen Datenstrom. Diese Synchronisation kann der Empfänger aufgrund der bereits erfolgten Rahmensynchronisation berechnen.

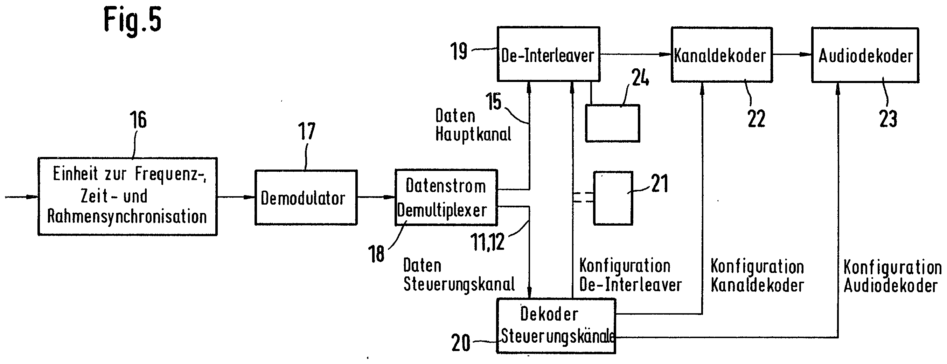

Anhand von Figur 5 wird der prinzipielle Aufbau einer erfindungsgemäßen Einrichtung zur Decodierung, d. h. eines Empfängers beschrieben. Die durchgezogenen Pfeile in Figur 5 zeigen den Signalfluss, die punktierten Pfeile den Fluss der Steuerdaten, d.h. der decodierten Daten der Steuerkanäle 11 und 12. Der Empfänger weist eingangsseitig eine Einheit 16 zur Zeit-, Frequenz- und/oder Rahmensynchronisierung des Eingangsdatenstromes auf. Dieses resynchronisierte Signal wird mittels Demodulator 17 demoduliert. Das demodulierte Signal wird in einem De-Multiplexer 18 aufgeteilt in einen Hauptdatenstrom, bestehend aus den Informationskanälen 15 mit den Services, sowie in Datenströme für die Steuerungskanäle 11 und 12. Die Daten der Informationskanäle 15 gehen in den Speicher 24 des Entwürflers/De-Interleavers 19, die Daten der Steuerungskanäle 11, 12 werden im Decoder 20 decodiert. Neben den Steuerungsdaten für den De-Interleaver 19 liefert der Decoder 20 auch die Konfigurierungsdaten für den Kanaldecoder 22 und den Quelldecoder/Audiodecoder 23, die im zweiten Steuerungskanal 12 enthalten sind. Der Hauptdatenstrom, d.h. die Informationskanäle 15 werden vom De-Interleaver 19, sobald dieser gefüllt ist und die Daten in der richtigen Reihenfolge umsortiert sind, bzw. in der richtigen Reihenfolge ausgelesen werden, an den Kanaldecoder 22 und dann an den Audiodecoder 23 weitergereicht. Der De-Interleaver 19 besitzt eine Steuereinheit 21 über die die Entwürfelung gesteuert wird. Im Falle des Ausführungsbeispiels gemäß Figur 4 wird die Entwürfelung aufgrund vorab gespeicherter Steuerungsdaten, zum Beispiel abgespeicherter Konfigurationsdaten, insbesondere Verknüpfungen zwischen vorgegebener Empfangsfrequenz oder Empfangsbereich und einer Serviceart, ...konfiguriert. Die im Speicher 24 des De-Interleavers 19 abgespeicherten Bits der Informationskanäle 15 werden dann in der durch diese Steuerungsdaten vorbestimmten Reihenfolge ausgelesen. Im Falle des Ausführungsbeispiels gemäß Figur 3, wo der Steuerungskanal 11 bereits decodiert wird, bevor der Speicher 14 des De-Interleavers gefüllt wird, liefert der Steuerungskanal Konfigurationsdaten für die Entwürfelung und /oder Daten der Konfigurierung der Informationskanäle 15, beispielsweise Informationen über deren Art, Lage und/ oder Länge in einem Übertragungsrahmen an die Steuereinheit 21, die diese dann für das Umsortieren der Daten und zur Auslesesteuerung an den De-Interleaver weiterleitet.

Im Ausführungsbeispiel wurde als Quelldecoder ein Audiodecoder vorgestellt. Natürlich kann je nach den übertragenen Daten auch ein anderer Quelldecoder vorgesehen werden, zum Beispiel für übertragene Bilddaten, Fax-Dienste, Paketdienste, Programmbegleittexte usw..

## Patentansprüche

1. Verfahren zur Decodierung von Datenströmen, die Informations (15)- und Steuerungskanäle (11, 12) umfassen, wobei diese in Übertragungsrahmen (13) eingebettet und ihre Bits verwürfelt sind, **dadurch gekennzeichnet, dass** die Steuerungskanäle (11, 12) Informationen zur Entwürfelung und Dekodierung der Informationskanäle enthalten und dass mit der Entwürfelung der Informationskanäle begonnen wird bevor mindestens ein Steuerungskanal (11, 12) decodiert ist, indem diese Informationen zur Entwürfelung der Informationskanäle aufgrund von vorab vorhandenen Informationen oder vorab gespeicherten Daten abgeschätzt werden.

2. Verfahren nach Anspruch 1, **dadurch gekennzeichnet, dass** ein erster Steuerungskanal (11) vorgesehen ist, der Daten für die Konfigurierung der Entwürfelung und/ oder der Konfigurierung der Informationskanäle (15), beispielsweise Informationen über deren Art, Lage und/oder Länge in einem Übertragungsrahmen (13) enthält.

3. Verfahren nach Anspruch 1 oder 2, **dadurch gekennzeichnet, dass** ein zweiter Steuerungskanal (12) vorgesehen ist, der Daten für die Konfiguration eines Kanal(22)- und/oder Quelldecoders (23) enthält mit dem die entwürfelten Informationskanäle (15) kanal- bzw. quelldecodiert werden.

4. Verfahren nach einem der Ansprüche 1 bis 3, **dadurch gekennzeichnet, dass** mit der Entwürfelung begonnen wird, bevor entweder nur der/ein Steuerungskanal (11) decodiert ist oder sowohl der/ein erste/r und der/ein zweite/r Steuerungskanal (11, 12) decodiert ist.

5. Verfahren nach einem der Ansprüche 1 bis 4, **dadurch gekennzeichnet, dass** die Entwürfelung vor der Decodierung mindestens eines Steuerungskanals (11, 12) aufgrund mindestens eines folgender Kriterien vorgenommen wird:
- für eine vorgegebene Empfangsfrequenz wird die wahrscheinlichste Entwürfelungskonfiguration abgeschätzt,
- wenn für eine vorgegebene Empfangsfrequenz oder einen Empfangsbereich bereits eine Entwürfelung vorgenommen wurde, wird auf die dort verwendete Entwürfelungskonfiguration zurückgegriffen,
- wenn eine gleiche Serviceart bereits auf einer anderen Empfangsfrequenz empfangen wurde, wird die für diese Serviceart bereits verwendete Entwürfelungskonfiguration auch aktuell zugrunde gelegt.

6. Verfahren nach einem der Ansprüche 1 bis 5, **dadurch gekennzeichnet, dass** zuerst der/ein erste/r Steuerungskanal (11) mit Informationen über die Konfiguration der Entwürfelung und Art, Lage und/oder Länge der Informationskanäle (15) im Übertragungsrahmen (13) decodiert wird, dass nach der Decodierung des/eines ersten Steuerungskanals (11) mit der Entwürfelung begonnen wird, ohne auf die Decodierung eines/des zweiten Steuerungskanals (12) mit Kanal- und/oder Quelldecoderkonfigurationsdaten zu warten.

7. Verfahren nach einem der Ansprüche 1 bis 6, **dadurch gekennzeichnet, dass** die Daten bereits entwürfelter Informationskanäle (15) verworfen werden, wenn eine nicht gewünschte Serviceart empfangen wurde, bevor die vollständige Decodierung der Steuerungskanäle (11, 12) beendet worden ist.

8. Verfahren nach einem der Ansprüche 1 bis 7, **dadurch gekennzeichnet, dass** zur Detektion einer gewünschten Serviceart überprüft wird, ob auf einer vorgegebenen Empfangsfrequenz oder innerhalb eines vorgegebenen Empfangsbereichs diese Serviceart bereits empfangen wurde.

9. Verfahren nach einem der Ansprüche 1 bis 7, **dadurch gekennzeichnet, dass** zur Detektion einer gewünschten Serviceart auf eine Verknüpfung zwischen einer vorgegebenen Empfangsfrequenz oder eines vorgegebenen Empfangsbereiches und einer Serviceart zurückgegriffen wird, wobei diese Verknüpfung fest voreingestellt ist oder nach einem vorgegebenen Zeitplan festgelegt ist.

10. Verfahren nach einem der Ansprüche 1 bis 9, **dadurch gekennzeichnet, dass** für den Fall, dass die Wiederholzeit der Steuerungskanäle länger als die Zeit, die für die Verwürfelung zusammengehöriger Bits von Informationskanälen (15) zugrunde gelegt wird, bei der Entwürfelung Datenteile solange verworfen werden, bis notwendige Informationen aus mindestens einem Steuerungskanal (11, 12) vorhanden sind.

11. Verfahren nach einem der Ansprüche 1 bis 10, **dadurch gekennzeichnet,**
**dass** vor der Entwürfelung eine Frequenz-, Zeit- und/oder
Rahmensynchronisation erfolgt, insbesondere um die Lage der Steuerungskanäle (11, 12) und der Informationskanäle (15) zu erkennen.

12. Verfahren nach Anspruch 11, **dadurch gekennzeichnet, dass** die Entwürfelung von der Frequenz-, Zeit- und/oder Rahmensynchronisation gesteuert wird.

13. Einrichtung zur Decodierung von Datenströmen, die Informations (15)- und Steuerungskanäle (11, 12) umfassen, wobei diese in Übertragungsrahmen (13) eingebettet und ihre Bits verwürfelt sind und wobei die Steuerungskanäle (11, 12) Informationen zur Entwürfelung und Dekodierung der Informationskanäle enthalten, mit folgenden Merkmalen:
- einem Datenstrom-Demuliplexer (18) zur Trennung der Informationskanäle (15) von den Steuerungskanälen (11, 12) und deren zumindest teilweiser Parallelverarbeitung und zum Beginn der Entwürfelung, bevor mindestens ein Steuerungskanal (11, 12) decodiert ist,
- einem Entwürfler/De-Interleaver (19) zum Speichern und zur Umsortierung der Informationskanäle (15) bzw. deren Bits,
- einem Decoder (20) für den/die Steuerungskanal/-kanäle (11, 12),
- einem Kanal- und/oder Quelldecoder (22, 23) für die entwürfelten Informationskanäle (15),
- einer Steuereinheit (21) zur Steuerung des Entwürflers/ De-Interleavers (19) bezüglich seiner Konfigurierung, wobei mit der Entwürfelung der Informationskanäle begonnen wird bevor mindestens ein Steuerungskanal dekodiert ist, indem diese Informationen zur Entwürfelung der Informationskanäle aufgrund von vorab vorhandenen Informationen oder vorab gespeicherten Daten abgeschätzt werden.

14. Einrichtung nach Anspruch 13, **dadurch gekennzeichnet, dass** die Steuereinheit (21) mit dem Decoder (20) für den/die Steuerungskanal/-kanäle (11, 12) in Wirkverbindung steht.

15. Einrichtung nach Anspruch 13 oder 14, **dadurch gekennzeichnet, dass** der Decoder (20) für den/die Steuerungskanal/-kanäle (11, 12) mit dem Kanal- und/oder Quelldecoder (22, 23) in Wirkverbindung steht, um diese/n zu konfigurieren.

16. Verwendung des Verfahrens nach einem der Ansprüche 1 bis 12 oder der Einrichtung nach einem der Ansprüche 13 bis 15 für das Übertragungssystem DRM, Digital Radio Mondiale.

## Claims

1. Method for decoding data streams that comprise information channels (15) and control channels (11, 12), wherein these are embedded in transmission frames (13) and their bits are scrambled, **characterized in that** the control channels (11, 12) contain information pertaining to the descrambling and decoding of the information channels and **in that** descrambling of the information channels is begun before at least one control channel (11, 12) is decoded, by virtue of this information pertaining to the descrambling of the information channels being estimated on the basis of pre-existent information or pre-stored data.

2. Method according to Claim 1, **characterized in that** a first control channel (11) is provided that contains data for configuring the descrambling and/or the configuration of the information channels (15), for example information about the type, position and/or length thereof in a transmission frame (13).

3. Method according to Claim 1 or 2, **characterized in that** a second control channel (12) is provided that contains data for configuring a channel decoder (22) and/or source decoder (23) that is used to channel-decode or source-decode the descrambled information channels (15).

4. Method according to one of Claims 1 to 3, **characterized in that** descrambling is begun before either only the/a control channel (11) is decoded or both the/a first and the/a second control channel (11, 12) are decoded.

5. Method according to one of Claims 1 to 4, **characterized in that** descrambling is performed before decoding of at least one control channel (11, 12) on the basis of at least one of the following criteria:
- the most probable descrambling configuration is estimated for a prescribed reception frequency,
- if a descrambling has already been performed for a prescribed reception frequency or a reception range, then the descrambling configuration used therein is drawn upon,
- if an identical service type has already been received on another reception frequency, then the descrambling configuration already used for this service type is taken as a basis at present too.

6. Method according to one of Claims 1 to 5, **characterized in that** first of all, the/a first control channel (11) having information about the configuration of the descrambling and a type, position and/or length of the information channels (15) in a transmission frame (13) is decoded, and that after decoding of the/a first control channel (11), descrambling is begun without waiting for the decoding of a/the second control channel (12) having channel and/or source decoder configuration data.

7. Method according to one of Claims 1 to 6, **characterized in that** the data of already descrambled information channels (15) are rejected if an unwanted service type has been received before the complete decoding of the control channels (11, 12) has been terminated.

8. Method according to one of Claims 1 to 7, **characterized in that** detection of a wanted service type involves the performance of a check to determine whether this service type has already been received on a prescribed reception frequency or within a prescribed reception range.

9. Method according to one of Claims 1 to 7, **characterized in that** detection of a wanted service type involves a link between a prescribed reception frequency or a prescribed reception range and a service type being drawn upon, this link being firmly preset or being stipulated according to a prescribed time schedule.

10. Method according to one of Claims 1 to 9, **characterized in that** if the repetition time of the control channels is longer than the time that is taken as a basis for descrambling associated bits from information channels (15), then the descrambling involves data portions being rejected until necessary information is available from at least one control channel (11, 12).

11. Method according to one of Claims 1 to 10, **characterized in that** descrambling is preceded by a frequency, time and/or frame synchronization being effected, particularly in order to identify the position of the control channels (11, 12) and of the information channels (15).

12. Method according to Claim 11, **characterized in that** descrambling is controlled by the frequency, time and/or frame synchronization.

13. Device for decoding data streams that comprise information channels (15) and control channels (11, 12), wherein these are embedded in transmission frames (13) and their bits are scrambled and wherein the control channels (11, 12) contain information pertaining to the descrambling and decoding of the information channels, having the following features:
- a data stream demultiplexer (18) for separating the information channels (15) from the control channels (11, 12) and processing them in parallel at least to some extent and for beginning descrambling before at least one control channel (11, 12) is decoded,
- a descrambler/deinterleaver (19) for storing and re-sorting the information channels (15) or the bits thereof,
- a decoder (20) for the control channel (s) (11, 12),
- a channel and/or source decoder (22, 23) for the descrambled information channels(15),
- a control unit (21) for controlling the descrambler/deinterleaver (19) in terms of the configuration thereof, wherein descrambling of the information channels is begun before at least one control channel is decoded, by virtue of this information pertaining to the descrambling of the information channels being estimated on the basis of pre-existent information or pre-stored data.

14. Device according to Claim 13, **characterized in that** the control unit (21) is operatively connected to the decoder (20) for the control channel(s) (11, 12).

15. Device according to Claim 13 or 14, **characterized in that** the decoder (20) for the control channel(s) (11, 12) is operatively connected to the channel and/or source decoder (22, 23) in order to configure said control channel(s).

16. Use of the method according to one of Claims 1 to 12 or of the device according to one of Claims 13 to 15 for the transmission system DRM, Digital Radio Mondiale.

## Revendications

1. Procédé de décodage de flux de données, qui comprennent des canaux d'information (15) et de commande (11,12), dans lequel ceux-ci sont incorporés dans des trames de transmission (13)et leurs bits sont embrouillés, **caractérisé en ce que** les canaux de commande (11,12) contiennent des informations pour désembrouiller et décoder les canaux d'information et **en ce que** le désembrouillage des canaux d'information est commencé avant qu'au moins un canal de commande (11,12) soit décodé, en estimant ces informations pour désembrouiller les canaux d'information sur la base d'informations préalablement présentes ou préalablement mémorisées.

2. Procédé selon la revendication 1, **caractérisé en ce qu'**un premier canal de commande (11) est prévu, qui contient des données pour la configuration du désembrouillage et/ou la configuration des canaux d'information (15), par exemple des informations relatives à leur type, position et/ou longueur dans une trame de transmission (13).

3. Procédé selon la revendication 1 ou 2, **caractérisé en ce qu'**un deuxième canal de commande (12) est prévu, qui contient des données pour la configuration d'un décodeur de canal (22) et/ou décodeur de source (23) avec lequel les canaux d'information (15) désembrouillés sont codés par canaux, respectivement source.

4. Procédé selon une des revendications 1 à 3, **caractérisé en ce qu'**on commence le désembrouillage, avant que soit seulement le/un canal de commande (11) soit décodé soit tant le/un premier et le/un deuxième canal de commande (11,12) soient décodés.

5. Procédé selon une des revendications 1 à 4, **caractérisé en ce que** le désembrouillage est entrepris avant le décodage d'au moins un canal de commande (11,12) sur la base d'au moins un critère suivant :
- pour une fréquence de réception prescrite, la configuration de désembrouillage la plus probable est estimée,
- lorsque pour une fréquence de réception prescrite ou une zone de réception, un désembrouillage a déjà été entrepris, on se réfère à la configuration de désembrouillage qui y a été utilisée,
- lorsque pour un même type de service on a reçu sur une autre fréquence de réception, la configuration de désembrouillage déjà utilisée pour ce type de service est aussi utilisée comme base actuelle.

6. Procédé selon une des revendications 1 à 5, **caractérisé en ce que** d'abord le/un premier canal de commande (11) avec des informations relatives à la configuration du désembrouillage et au type, à la position et/ou à la longueur des canaux d'information (15) est décodé dans la trame de transmission (13), **en ce qu'**après le décodage du/d'un premier canal de commande (11) on commence le désembrouillage, sans attendre le décodage d'un/du deuxième canal de commande (12) avec des données de configuration de décodeur de canal et/ou de source.

7. Procédé selon une des revendications 1 à 6, **caractérisé en ce que** les données des canaux d'information (15) déjà désembrouillés sont rejetées, lorsqu'un type de service non souhaité a été reçu, avant que le décodage complet des canaux de commande (11,12) ait pris fin.

8. Procédé selon une des revendications 1 à 7, **caractérisé en ce que** pour détecter un type de service souhaité, on vérifie si sur une fréquence de réception prescrite ou à l'intérieur d'une zone de réception prescrite ce type de service a déjà été reçu.

9. Procédé selon une des revendications 1 à 7, **caractérisé en ce que** pour détecter un type de service souhaité, on se réfère à une association entre une fréquence de réception prescrite ou une zone de réception prescrite et un type de service, dans lequel cette association est préréglée fixement ou déterminée selon un calendrier prescrit.

10. Procédé selon une des revendications 1 à 9, **caractérisé en ce que** dans le cas où le temps de répétition des canaux de commande est plus long que le temps, qui est la base pour le désembrouillage des bits correspondants des canaux d'information (15), des éléments de données sont rejetés lors du désembrouillage tant que les informations nécessaires d'au moins un canal de commande (11,12) sont présentes.

11. Procédé selon une des revendications 1 à 10, **caractérisé en ce qu'**avant le désembrouillage, une synchronisation de fréquence, temps et/ou trame a lieu, notamment pour reconnaître la position des canaux de commande (11,12) et des canaux d'information (15).

12. Procédé selon la revendication 11, **caractérisé en ce que** le désembrouillage est commandé par la synchronisation de fréquence, temps et/ou trame.

13. Dispositif de décodage de flux de données, qui comprennent des canaux d'information (15) et de commande (11,12), dans lequel ceux-ci sont incorporés dans des trames de transmission (13) et leurs bits sont embrouillés, et dans lequel les canaux de commande (11,12) contiennent des informations pour désembrouiller et décoder les canaux d'information, avec les caractéristiques suivantes :
- un démultiplexeur de flux de données (18) pour séparer les canaux d'information (15) des canaux de commande (11,12) et leur traitement parallèle au moins partiel et au début du désembrouillage, avant qu'au moins un canal de commande (11,12) soit décodé,
- un désembrouilleur/ désentrelaceur (19) pour mémoriser et trier les canaux d'informations (15), respectivement leurs bits,
- un décodeur (20) pour le/les canal/canaux de commande (11,12),
- un décodeur de canal et/ou de source (22,23) pour les canaux d'information désembrouillés (15),
- une unité de commande (21) pour commander le désembrouilleur/ désentrelaceur (19) en ce qui concerne sa configuration, dans lequel on commence le désembrouillage des canaux d'information avant qu'au moins un canal de commande soit décodé, en estimant ces informations pour désembrouiller les canaux d'information sur la base d'informations préalablement présentes ou préalablement mémorisées.

14. Dispositif selon la revendication 13, **caractérisé en ce que** l'unité de commande (21) est en liaison opérationnelle avec le décodeur (20) pour le/les canal/canaux de commande (11,12).

15. Dispositif selon la revendication 13 ou 14, **caractérisé en ce que** le décodeur (20) est en liaison opérationnelle pour le/les canal/canaux de commande (11,12) avec le décodeur de canal et/ou de source (22,23), afin de configurer celui-ci/ceux-ci.

16. Utilisation du procédé selon une des revendications 1 à 12 ou du dispositif selon une des revendications 13 à 15 pour le système de transmission DRM, Digital Radio Mondiale.
